(19) **Europäisches Patentamt**
**European Patent Office**
**Office européen des brevets**

(11) **EP 4 414 937 A1**

(12) **EUROPEAN PATENT APPLICATION**

(43) Date of publication:
**14.08.2024 Bulletin 2024/33**

(51) International Patent Classification (IPC):
**G06T 7/50** (2017.01)    **G06N 3/04** (2023.01)
**G06N 3/0455** (2023.01)    **G06N 3/0464** (2023.01)

(21) Application number: **23155975.8**

(22) Date of filing: **10.02.2023**

(52) Cooperative Patent Classification (CPC):
**G06T 7/50; G06N 3/0455; G06N 3/0464;**
G06N 3/09; G06T 2207/10024; G06T 2207/20016;
G06T 2207/20084

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicants:
• **TOYOTA JIDOSHA KABUSHIKI KAISHA**
**Aichi-Ken 471-8571 (JP)**
• **ETH Zurich**
**8092 Zürich (CH)**

(72) Inventors:
• **ABBELOOS, Wim**
**1140 BRUSSELS (BE)**

• **PICCINELLI, Luigi**
**8092 ZURICH (CH)**
• **SAKARIDIS, Christos**
**8092 ZURICH (CH)**
• **YU, Fisher**
**8092 ZURICH (CH)**

(74) Representative: **Cabinet Beau de Loménie**
**158, rue de l'Université**
**75340 Paris Cedex 07 (FR)**

Remarks:
Amended claims in accordance with Rule 137(2)
EPC.

(54) **METHODS AND SYSTEMS FOR DENSE REGRESSION TASKS**

(57)    A computer-implemented method for dense regression tasks in input data (I). The method comprises (S 10) determining at least one encoded feature map (F) of the input data (I); (S20) discretizing the at least one encoded feature map (F) to obtain discrete representations (H) configured to represent internal space patterns of the input data (I); (S30) extracting pixel-level features (P) for each element of the at least one encoded feature map (F); (S40) calculating a predicted output (D) by transferring portions of the discrete representations (H) to locations of the pixel-level features (P), wherein the portions and the locations are calculated based on similarity between elements of the pixel-level features (P) and elements of the discrete representations (H).

**EP 4 414 937 A1**

10

START

S10 — Determining an encoded feature map (F) of an image (I)

S20 — Discretizing the encoded feature map (F) to obtain discrete representations (H)

S30 — Extracting pixel-level features (P)

S40 — Transferring portions of the discrete representations (H) to the pixel-level features (P)

S50 — Projecting the predicted output to physical values

END

**FIG.1**

**Description**

BACKGROUND OF THE INVENTION

1. Field of the Invention

The invention relates to methods and systems for dense regression tasks. In particular, the invention relates to methods and systems for depth estimation in an image.

2. Description of Related Art

Dense regression tasks, i.e. tasks that provide estimation of values of a parameter for each element of input data are important for many applications.

In particular, depth estimation is a dense regression task that is paramount in computer vision, for example for understanding geometric relations in a scene. Such dense regression task consists in predicting distances between the center of projection of the image and geometrical positions corresponding to each pixel. Depth estimation finds direct significance in downstream applications such as 3D modeling, robotics, and autonomous cars. As the estimation is generally achieved for each pixel of the input image it is considered a dense estimation.

Among depth estimation tasks, monocular depth estimation tasks, i.e. the estimation of depths corresponding to pixels from a single image is particularly difficult due to an inherent scale ambiguity leading to the fact that a same 2D input image with a given set of pixels can correspond to an infinite number of 3D scenes with different sets of geometrical positions.

Recent progress in using neural networks yields a considerable improvement in the performance of monocular depth estimation tasks. In particular, state-of-the-art methods typically involve convolutional neural networks (CNN).

However, most methods use neural network models that either impose geometric constraints on the image or explicitly discretize the continuous output depth using predefined ranges. Such geometric constraints and predefined depth ranges can be viewed as imposed priors that prevent the models from modelling arbitrary patterns with arbitrary depths which are frequent in real-world scenes. Therefore, such priors inherently limit the expressiveness of the methods.

There is thus a need for methods for dense regression tasks that overcome the limits of the prior art.

The following references disclose various methods relating to monocular depth estimation tasks using neural networks or techniques useful for performing such tasks.

[REF 1] BHAT, Shariq Farooq, ALHASHIM, Ibraheem, et WONKA, Peter. Adabins: Depth estimation using adaptive bins. In : Proceedings of the IEEE/CVF Conference on Computer Vision and Pattern Recognition. 2021. p. 4009-4018.

[REF 2] FU, Huan, GONG, Mingming, WANG, Chaohui, et al. Deep ordinal regression network for monocular depth estimation. In : Proceedings of the IEEE conference on computer vision and pattern recognition. 2018. p. 2002-2011.

[REF 3] LEE, Jin Han, HAN, Myung-Kyu, KO, Dong Wook, et al. From big to small: Multi-scale local planar guidance for monocular depth estimation. arXiv preprint arXiv: 1907.10326, 2019.

[REF 4] MASOUMIAN, Armin, RASHWAN, Hatem A., CRISTIANO, Julián, et al. Monocular depth estimation using deep learning: A review. Sensors, 2022, vol. 22, no 14, p. 5353.

[REF 5] ZHU, Xizhou, SU, Weijie, LU, Lewei, LI Bin, WANG, Xiaogang, And DAI, Jifeng. Deformable DETR: deformable transformers for end-to-end object detection. In 9th International Conference on Learning Representations, ICLR 2021, Virtual Event, Austria, May 3-7, 2021.

[REF 6] BA, Jimmy Lei, KIROS, Jamie Ryan, et HINTON, Geoffrey E. Layer normalization. arXiv preprint arXiv: 1607.06450, 2016.

[REF 7] GEIGER, Andreas, LENZ, Philip, et URTASUN, Raquel. Are we ready for autonomous driving? The KITTI vision benchmark suite. In : 2012 IEEE conference on computer vision and pattern recognition. IEEE, 2012. p. 3354-3361.

[REF 8] ZHANG, Zhenyu, CUI, Zhen, XU, Chunyan, et al. Pattern-affinitive propagation across depth, surface normal and semantic segmentation. In : Proceedings of the IEEE/CVF conference on computer vision and pattern recognition. 2019. p. 4106-4115.

[REF 9] PATIL, Vaishakh, SAKARIDIS, Christos, LINIGER, Alexander, et al. P3Depth: Monocular Depth Estimation with a Piecewise Planarity Prior. In : Proceedings of the IEEE/CVF Conference on Computer Vision and Pattern Recognition. 2022. p. 1610-1621.

[REF 10] YIN, Wei, LIU, Yifan, SHEN, Chunhua, et al. Enforcing geometric constraints of virtual normal for depth prediction. In : Proceedings of the IEEE/CVF International Conference on Computer Vision and Pattern Recognition. 2019. p. 5684-5693.

[REF 11] YU, Zehao, ZHENG, Jia, LIAN, Dongze, et al. Single-image piece-wise planar 3d reconstruction via associative embedding. In : Proceedings of the IEEE/CVF Conference on Computer Vision and Pattern Recognition. 2019. p. 1029-1037.

[REF 12] LEE, Sihaeng, LEE, Janghyeon, KIM, Byungju, et al. Patch-wise attention network for monocular depth estimation. In : Proceedings of the AAAI Conference on Artificial Intelligence. 2021. p. 1873-1881.

[REF 13] QIAO, Siyuan, ZHU, Yukun, ADAM, Hartwig, et al. Vip-deeplab: Learning visual perception with depth-aware video panoptic segmentation. In : Proceedings of the IEEE/CVF Conference on Computer Vision and Pattern Recognition. 2021. p. 3997-4008.

[REF 14] YUAN, Weihao, GU, Xiaodong, DAI, Zuozhuo, et al. Neural Window Fully-Connected CRFs for Monocular Depth Estimation. In : Proceedings of the IEEE/CVF Conference on Computer Vision and Pattern Recognition. 2022. p. 3916-3925.

[REF 15] AGARWAL, Ashutosh et ARORA, Chetan. Attention Attention Everywhere: Monocular Depth Prediction with Skip Attention. In : Proceedings of the IEEE/CVF Winter Conference on Applications of Computer Vision. 2023. p. 5861-5870.

[REF 16] EIGEN, David, PUHRSCH, Christian, et FERGUS, Rob. Depth map prediction from a single image using a multi-scale deep network. Advances in neural information processing systems, 2014, vol. 27.

## SUMMARY OF THE INVENTION

According to aspects of the present disclosure, a computer-implemented method for dense regression tasks in input data is provided. The method comprises steps of:

- determining at least one encoded feature map of the input data;
- discretizing the at least one encoded feature map to obtain discrete representations configured to represent internal space patterns of the input data;
- extracting pixel-level features for each element of the at least one encoded feature map; and
- calculating a predicted output by transferring portions of the discrete representations to locations of the pixel-level features, wherein the portions and the locations are calculated based on similarity between elements of the pixel-level features and elements of the discrete representations.

For the sake of conciseness, the computer-implemented method for a dense regression task in an image is referred to hereinafter as the regression method. Further, a system for a dense regression task in an image is referred to hereinafter as the estimation system.

In the present description, a dense regression task may comprise, in particular, any computer vision task related to the estimation, for each pixel of an image, of one or more values. Such values may, for example, comprise: depth value, surface normals data, optical flow, boundaries detection.

In the present description, encoded feature maps of input data are a mathematical object comprising (high-level) features of the input data that have been encoded into a higher dimensionality. Further, the encoded features maps generally have a lower spatial extent than in the input data.

Encoded feature maps may be obtained by processing input data through one or more layers of a neural network. For example, encoded features maps may be obtained through a convolutional layer of a convolutional neural network. In particular, encoded feature maps may be obtained through a sequence of non-linearities, learnable convolutional layers, and normalization layers of a convolutional neural network.

In the present description, locations of the pixel-level features are spatial regions in the array representing the pixel-level features.

In the present description, each discrete representation represents a particular kind of internal space pattern in the input data, also referred to as internal space concepts. In an image, the internal space patterns may be, for example, generic high-level features, such as object-ness (a probability that an object exists in a proposed region of interest), relative positioning, geometric structures.

By contrast to methods of the prior art, the disclosed regression method generates discrete representations of the image at an internal level. The discretization occurs at the abstract level of internal features of the image and not at the output level (for example the output depth level). Therefore, such discrete representations are unconstrained compared to the representations obtained with other methods, whose output is constrained due to the limited variety of objects that can be used as priors (starting points) for the output.

As the present method lifts explicit geometric constraints on the scene represented by the input image, such method performs better than most existing methods on known datasets and benchmarks.

According to aspects, the steps of the method are performed for a plurality of encoded feature maps each having a resolution parameter corresponding to a resolution of the input data so as to obtain a plurality of predicted outputs; wherein the method further comprises: combining the plurality of predicted outputs obtained from the plurality of encoded feature maps having different resolutions.

According to this configuration, information from different resolutions can be aggregated which improves the efficiency of the method. In particular, when the input data is an image, encoded feature maps at lower resolution may capture relative position of objects and planes such as background and foreground while encoded features maps at higher resolutions capture more refined details such as borders of objects.

According to aspects, combining the plurality of predicted outputs obtained from the plurality of encoded feature maps having different resolutions comprises calculating a mean value of the plurality of predicted outputs.

According to aspects, the step of extracting pixel-level features for each element of the at least one encoded feature maps comprises calculating a plurality of pixel-level features having different resolutions.

According to aspects, the step of determining at least one encoded feature map of the input data comprises using a multi-scale deformable attention module to refine the encoded feature maps at different resolutions.

Therefore, information between different resolutions is shared particularly efficiently.

According to aspects, the step of discretizing the at least one encoded feature map to obtain discrete representations configured to represent internal space patterns of the input data comprises using a cross-attention module.

According to aspects, the cross-attention module is a transposed cross-attention module configured to induce a soft clustering of the encoded features among the discrete representations.

Therefore attention weights of the cross attention module, which are inherently input-dependent may be used to partition the encoded feature maps into distinct discrete representations in a particularly efficient way.

In contrast to many methods of the prior art, the discretization process of the disclosed regression method may therefore be input-dependent and need not be pre-defined during the design of the method. Further, the specific discretization of the feature maps between different discrete representations takes place at inference time as well.

According to aspects, the transposed cross-attention module comprises learnable priors, and wherein the discrete representations are obtained iteratively using the transposed cross-attention module initialized with such learnable priors.

Therefore, the priors of the discretization process may be trained and improved over iterations of the process. This provides a better performance of the estimation task compared to methods using cross attention modules with non-learnable priors, for example non-learnable attention modules with random initialization) wherein hidden representations do not embody task-specific prior information.

According to aspects, the step of calculating a (unprojected) predicted output by transferring portions of the discrete representations to locations of the pixel-level features; comprises using a cross-attention module.

According to aspects, the method further comprises a step of projecting the predicted output to physical values.

According to aspects, the dense regression task is a monocular depth estimation task in an image; and the predicted output is projected to depth values to obtain a depth map.

The inventors have observed that the present method is particularly efficient when applied to monocular depth estimation in images. In particular, by discretizing the image at the internal level, the method is more efficient to capture the structure of a scene and therefore to estimate depth. This is particularly appreciable in indoor scenes, since these are usually populated by a multitude of objects.

The inventors have shown that present method outperforms most of the known methods when used on classical benchmarks datasets, such as the KITTI dataset disclosed in [REF 6]. Further, the inventors have also observed that the method is particularly efficient when applied to dense regression task such as surface normals estimation.

According to aspects, a system for dense regression tasks in input data is disclosed. The system comprises one or more processors and a computer-readable medium; the computer-readable medium comprising computer instructions stored therein, wherein the instructions, when executed by the one or more processors, cause the one or more processors to carry out the steps of:

- using an encoder module to determine at least one encoded feature map of the input data;
- using a first discretization module to discretize the at least one encoded feature map in order to obtain discrete representations configured to represent internal space patterns of the input data;
- using a decoder module for extracting pixel-level features from the at least one encoded feature map; and
- using a second discretization module to transfer portions of the discrete representations to location of the pixel-level features, wherein the portions and the locations are calculated based on similarity between elements of the pixel-level features and elements of the discrete representations, thereby calculating a predicted output.

The present disclosure is further related to a computer program including instructions for executing the steps of the above regression method when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram representing aspects of a method for dense regression tasks according to embodiments of the present disclosure;

FIG.2 is a schematic representation of an architecture of a method for dense regression tasks according to embodiments of the present disclosure;

FIGS. 3A-3B are charts illustrating advantages of embodiments of a method for dense regression tasks according to the present disclosure over other methods of the prior art.

DETAILED DESCRIPTION OF EMBODIMENTS

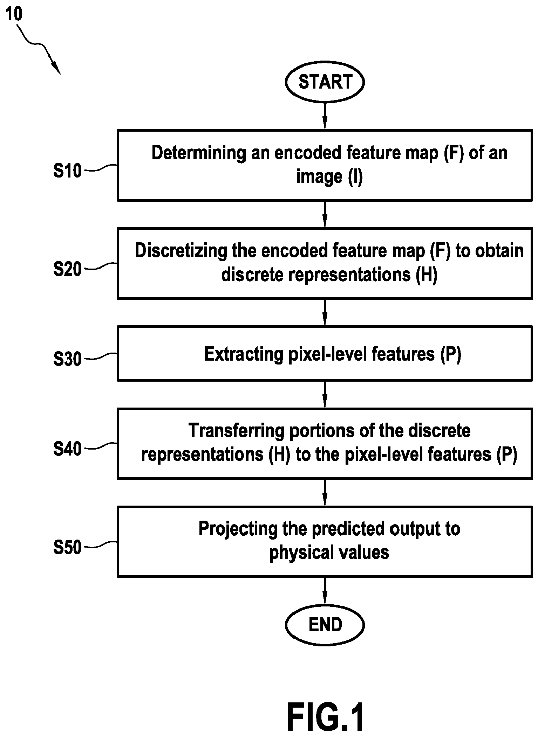

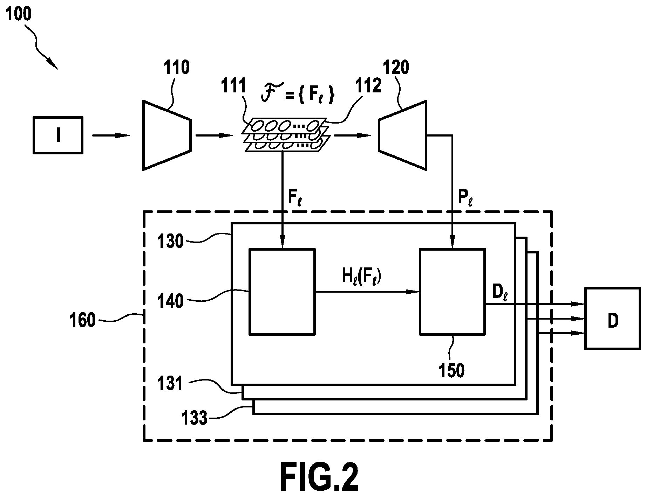

Embodiments of the regression method will be described with reference to FIG. 1 and FIG. 2, respectively. Although the described embodiments relate, in particular, to methods for a monocular depth estimation task in an image, the present disclosure is not limited to such embodiments but also relate to other dense regression tasks such as, for example, surface normals estimation tasks. Further, the present disclosure also relates to dense regression tasks wherein the input data is not an image but any data such as data comprising elements on a regular grid.

In reference to FIG. 1, embodiments of the dense regression method may comprise the main processing steps of: S10 determining an encoded feature map F of the image I; S20 discretizing the encoded feature map F to obtain discrete representations H configured to represent internal space patterns of the image I; S30 extracting pixel-level features P for each pixel in the image; S40 transferring portions of the discrete representations H to the pixel-level features P; S50 Projecting the predicted output to physical values.

The method may take as input data an image, for example an RGB image with two spatial dimensions (x, y) and three color dimensions (R, G, B). Further, the method may provide as an output a depth map, i.e. an image comprising pixels that are each associated to a depth value corresponding to an estimated depth of the geometrical position imaged by the corresponding pixel in the input image.

**S10: Determining an encoded feature map (F) of the image (I)**

In step S10, an encoded feature map F of the input image I is calculated. Such calculation may be performed through different means. For example, the encoded feature map F may be calculated using an encoder module. The encoder module may be, for example, convolutional or attention-based. In particular, the used encoder may have a structure wherein a receptive field of either convolution or windowed attention is increased by decreasing a resolution of the encoded feature maps.

In embodiments, the used encoder module may be based on a classification module whose 3 last layers (pooling layer, fully connected layer, and softmax layer) have been removed.

According to embodiments, the encoder module may be configured to generate encoded feature maps, $F_l$, of different resolutions, $l$, i.e. corresponding to different resolutions, or scales, in the image I. The resolution of the encoded feature maps is generally inferior to the size of the input image, for example it may be equal to 1/32 of the size of the input image.

In embodiments, the encoded features at different resolutions that are generated by the encoder module may be refined and information between the encoded features at different resolutions may be shared, for example, via one or more multi-scale deformable attention modules (MSDA). MSDA are disclosed, for example, in [REF 5]. In particular, encoded features maps at different resolutions may be combined via a feature pyramidal network which exploits layer normalization, see [REF 6].

**S20: Discretizing the encoded feature map (F) to obtain discrete representations (H)**

In step S20, the encoded feature map, F, of the image, I, that is obtained from step S10 is discretized to obtain discrete representations of the image. The discretization may be implemented using a discretizing module, for example an arbitrary feature partitioning (AFP) module. The number of possible discrete representations may have different values. For example, the inventors have observed that it is advantageous to choose a number of discrete representations comprised between 8 and 32. Further, the inventors have observed that it is judicious to avoid a large number of discrete representations. In particular, the inventors have observed that a number of discrete representations close to the number of encoded features in the encoded feature map causes noise to be introduced in the discretization process and thereby undermines its efficiency.

According to embodiments, encoded feature maps at different resolutions (obtained, for example, from an MSDA encoder) are each discretized to obtain a plurality of discrete representations at the same different resolutions. In such case, the discretization may also be performed using the AFP module.

The discretization of the encoded feature maps at different resolutions may be independently processed so that it is sufficient to describe the discretization implemented for a single resolution and it will be clear for skilled person how to apply the same process for the encoded features maps at other resolutions.

The AFP module may be a neural network such as a cross attention module that implements the discretization by learning how to define a partition function in an input-dependent fashion, i.e. depending on the encoded feature map input in the AFP module.

Specifically, the cross attention module comprises attention weights that are used to derive a partition of the encoded features maps between different discrete representations. In particular, for the encoded feature maps, the probabilities of belonging to one partition (discrete representation) are the attention weights.

Since, by definition, the attention weights are inherently dependent on the input of the AFP module, i.e., the encoded feature maps, the specific partitioning is also dependent on the input and takes place at inference time as well. A result is that the AFP module provides soft mutually exclusive partition for the encoded feature maps. Therefore, each encoded feature map is substantially assigned to a single discrete representation. Further, such exclusivity allows for utilizing a fewer number of partitions for the encoded feature maps.

According to embodiments, the cross attention module comprises learnable priors, referred to as a learnable-prior cross attention module. Given a predetermined encoded feature map, such learnable-prior cross attention module performs an iterative process which refines initial discrete representations, used as priors, over a number R of iterations. Therefore, in the present method, the priors are an initialization of the input-dependent partitioning. This is in stark contrast with methods of the prior art wherein priors of the module (such as geometric priors) are output priors that are handcrafted at the image level.

Specifically, in embodiments, the learnable cross attention module may be a transposed cross-attention module wherein the discrete representations are obtained using a transposed softmax operation as follows:

$$[\mathrm{softmax}(\mathbf{K}\mathbf{Q}^{\mathbf{T}})]^{\mathbf{T}}\mathbf{V} \qquad\qquad\qquad \text{(Equation 1)}$$

where **K** and **V** are a query tensor and a key tensor obtained from the encoded feature maps, and where, **Q** is a value tensor that is initialized to a prior discrete representation $\mathbf{H_{Prior}}$. The transpose operation provides a way to achieve soft mutual exclusiveness between the discrete representations.

The term "transposed" refers to the transpose operation that is used on the output of the "softmax" operator in Equation 1 compared to the known canonical expression which follows:

$$\mathrm{softmax}(\mathbf{K}\mathbf{Q}^{\mathbf{T}}) \qquad\qquad\qquad \text{(Equation 2)}$$

The tensors aforementioned may be obtained as projections of feature maps and prior internal discrete representations.

Pursuant to the discretization process, encoded feature maps are partitioned between discrete representations using the learnable-prior transposed cross attention module. At the t-th iteration out of R iterations (or, equivalently, at refinement step t), discrete representations that are sought (query) for given values of the encoded feature maps may be expressed as follows:

$$\boldsymbol{q}_j^{t+1} = \sum_{i=1}^{M} W_{ij}^t \mathbf{v}_{ij} \qquad\qquad\qquad \text{(Equation 3)}$$

Wherein $W_{ij}^t$ comprises attention weights defines as follows:

$$W_{ij}^t = \frac{\exp(k_i^T q_j^t)}{\sum_{k=1}^N \exp(k_i^T q_k^t)}$$ (Equation 4)

and wherein $q_j^t,\ k_j^t,\ v_j^t$ are query, key and value, respectively. N is the number of pixel-level features, i.e. clusters, and M is the number of pixels (or in a general case the size of the input data).

According to embodiments, the attention weights may be normalized to 1 along the "$i$" dimension in order to avoid vanishing or exploding quantities due to summation of un-normalized distribution.

Advantageously, the inherent behavior of the transposed softmax function forces a competition among outputs which induces a quantized partition between the different discrete representations. Specifically, due to the competition a weight may only be large to the detriment of other. Therefore, for a predetermined encoded feature, only a few attention weights may be significantly greater than zero. This causes the values **v,** i.e. the output-related content of the encoded feature, to be routed only to a few discrete representations at a successive iteration. The induced competition enforces a soft clustering of the input encoded feature maps wherein the actual partition function is represented by the last iteration queries. In other words the discrete representations may be determined by the query obtained after the last iteration of the soft attention module.

**S30 Extracting pixel-level features (P)**

In step S30, pixel-level features (P) are extracted from the encoded feature maps (F). The extraction may be implemented with a decoder module (120), for example a Feature Pyramid Network (FPN) module.

According to embodiments, wherein the input data is an image, the decoder module maps the low resolution encoded feature maps to full input resolution feature maps for pixel-wise regression.

**S40 Calculating a predicted output by transferring portions of the discrete representations (H) to the pixel-level features (P)**

In step S40, it is contemplated that portions of the discrete representation are transferred to locations of the pixel-level features, thereby obtaining a predicted output. Step S40 may be implemented, for example, with an internal scene discretization module (150). The internal scene discretization module (150) takes as inputs discrete representations obtained from step S20 and pixel-level features obtained from step S30.

According to embodiments, the portions of the discrete representations to be transferred to the pixel-level features and the locations to which the discrete representations are to be transferred are both calculated based on a similarity between the discrete representations and the pixel-level features.

Specifically, in the case of images, the similarity between discrete representations and pixel-level features is computed in order to spatially localize, in the output space defined by the pixels of the image, where to transfer information of the discrete representations.

As an example, the similarity may be calculated using a dot product similarity function. Advantageously, the kind of information to transfer to the pixel-level features is not constrained but can be any value. In particular, in the case of depth estimation in images, depth values are not explicitly treated in by the internal scene discretization module. Consequently, the discrete representations are free to encompass any generic high level concepts such as object-ness, relative positioning and geometric structures. This is in stark contrast with existing methods which explicitly constrain what is encompassed by the discrete representations, i.e. scalar depth values.

According to embodiments, the internal discretization module may comprise one or more cross-attention layers applied to discrete representations (used as queries) and pixel-level features. Further, the implementation of the one or more cross attention layers may comprise applying a softmax function to the discrete representations.

Specifically, an (unprojected) predicted output, **D,** obtained after a number, i, of layers may be expressed, using a canonical (non-transposed) softmax function, as follows:

$$\widehat{\mathbf{D}}_{i+1} = \mathrm{softmax}\big(\widehat{\mathbf{Q}}_i \widehat{\mathbf{K}}_i^T\big)\, \widehat{\mathbf{V}}_i + \widehat{\mathbf{D}}_i$$ (Equation 5)

where $\hat{\mathbf{Q}}_i$ is a tensor projection of the pixel-level features, and, $\hat{\mathbf{K}}_i$ and $\hat{\mathbf{V}}_i$ are linear transformations of the discrete representations.

In Equation 5, the term $\widehat{\mathbf{Q}}_i \widehat{\mathbf{K}}_i^T$ determines the spatial location for which each specific element of the discrete representations is responsible. Further, $\hat{\mathbf{V}}_i$ carries the semantic content of the discrete representations to be transferred to the corresponding spatial location.

In embodiments, the internal scene discretization module takes as inputs discrete representations of several resolutions and pixel-level features of several resolutions. In this case, the predicted outputs obtained for all the resolutions of discrete representations and pixel-level features are combined to obtain a combined predicted output.

**S50 Projecting the (unprojected) predicted output to physical values**

In step S50, the (unprojected) predicted output is projected to physical values that are results of the estimation task. In particular, when the input data is an image and the estimation task is a monocular depth estimation task, the predicted output obtained after step S40 from the internal discretization module 160 is projected to depth values. Each element of the pixel level-features is therefore assigned with a depth value, thereby providing a depth map.

The projection may be implemented, for example, via learnable neural network layers such as convolutional layers.

Optimization of the methods may be implemented iteratively by evaluating the performance of the predicted output. Such performance may be evaluated, for example, using the scale-invariant log-scale error defined in [REF 15].

Architecture of embodiments of a method for a dense regression task is illustrated on Fig. 2. An image is provided to an encoder 110 where it is converted to a plurality of encoded feature maps $F_l$ of various resolutions. In the encoded feature map 112 of the plurality, features of the image 111 are embedded at a common dimensionality for every resolution.

Each encoded feature map of the plurality of encoded feature maps are provided to a decoder 120, which extracts pixel-level features from the encoded feature maps. The pixel-level features have the same structure (layout) as the input data. For example, when the input data is an image, the pixel-level features may be represented as a 2D grid.

The encoded feature maps and the pixel-level features are provided to an internal discretization module 160 comprising a first discretization module 140 (for example an adaptive feature partitioning (AFP) module) and a second discretization module 150 (for example a scene discretization module). The plurality of encoded feature maps is processed by the first discretization module to be partitioned between discrete representations ($H_l$). The discrete representations may be obtained via self-competition and not by hard operators, therefore the partitioning is a soft partitioning that is quasi-exclusive.

The second discretization module completes the discretization of the image by mapping the discrete representations onto the continuous output space defined by the elements (pixels) of the pixel-level features. Due to the typical large number of elements of the pixel-level features, the output space can be considered continuous. The discretization module thereby generates a predicted output.

In the architecture represented in Fig. 2, encoded feature maps and pixel-level features of different resolutions are processed independently by instances (130, 131, 132) of the internal discretization module 160, thereby leading to a plurality of predicted output (**$H_l$**) corresponding to different resolutions. Such plurality of predicted outputs (**$D_l$**) at different resolutions is combined to provide a final predicted output **D** taking into account all the different resolutions.

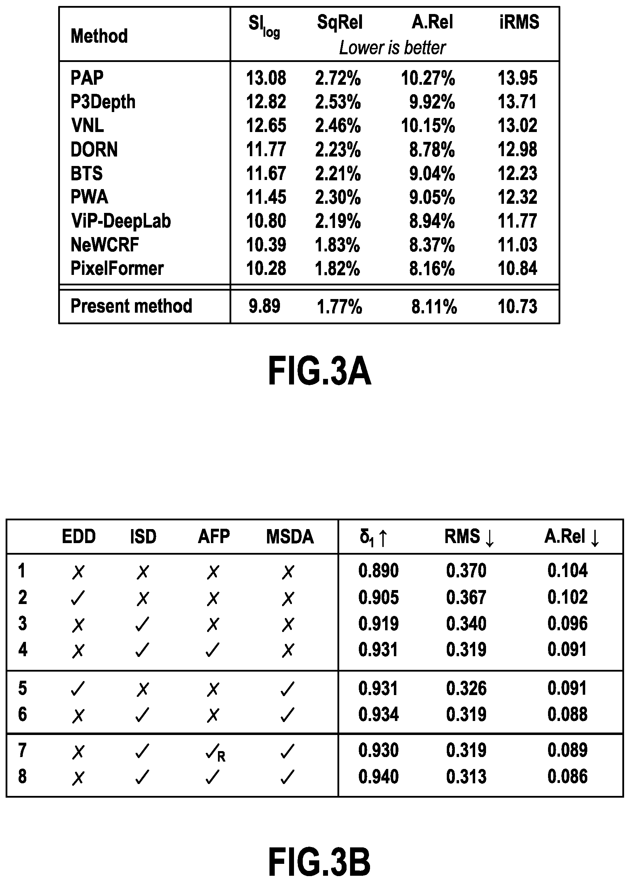

Figs. 3A-3B shows results of embodiments of present regression method when applied to monocular depth estimation in images from known datasets and comparison with known methods.

Fig. 3A shows results of the present regression method and known methods when such methods are first trained on KITTI datasets and tested on official KITTI private test set. The KITTI dataset comprises stereo images and corresponding Velodyne LiDAR scans of outdoor scenes captured from a moving vehicle (see, for example, [REF 7]). RGB and depth images have (mean) resolution of 1241×376. In Fig. 3A, the known methods to which the present method is compared are: PAP (see [REF 8]), P3Depth (see [REF 9]), VNL (see [REF 10]), DORN (see [REF 11]), BTS (see [REF 3]), PWA (see [REF 12]), ViP-DeepLab (see [REF 13]), NeWCRF (see [REF 14]), and PixelFormer (see [REF 15]).

In reference to Fig. 3A, performance of the methods on the KITTI dataset are evaluated with respect to the following criteria: scale-invariant error in log-scale ($SI_{log}$), squared mean relative error (Sq.Rel), absolute mean relative error (A.Rel), root mean square error of inverse depth (iRMS). Such criteria are often used to characterize performance of depth estimation and are known to the skilled person; see for example [REF 16].

As indicated by the sentence below the criteria, it is considered that a method provides better performance when these criteria exhibit lower values. Therefore, Fig. 3A shows that the present method is particularly efficient on the KITTI benchmark dataset and outperforms the methods of the prior art to which it is compared.

In reference to Fig.3B, an ablation study of the present method is presented. The ablation study shows the relative efficiency of different components of the architecture of the present method (ISD: Internal Scene Discretization module, AFP: Adaptive Feature partitioning module, MSDA: Multi-Scale Deformable Attention module) with respect to components of methods of the prior art (EDD: Explicit Depth Discretization module).

Each row corresponds to a specific situation where the architecture of the method comprises some or none of the components. A check mark indicates that the component is included in the method, and a cross mark indicates that the component is not included in the method. For the AFP module, a check mark with an index "R" indicates that a random initialization of the discrete representations is used, while a simple check mark (without index) indicates that a learnable prior is used for initialization. The EDD module and the ISD module correspond to two distinct ways of discretizing the input data and thereby cannot be jointly used in an embodiment.

The first row is a reference baseline wherein the depth estimation task is performed without any of the modules of the present method and without the EDD module of the prior art, for the sake of comparison.

The performances of the different architectures of the method are evaluated with respect to the following criteria: percentage of inlier pixels ($\delta_1$), root mean square error (RMS), absolute mean relative error (A.Rel). The up/down arrows next to the criteria indicates that the performance of the method is considered higher when the value of the criteria is higher/lower, respectively.

From the results shown in Fig. 3, it can be seen that the best results are obtained when the three modules of the present method, i.e. the ISD module, the AFP module, and the MSDA module are used synergistically (row 7 and 8). The performance is even more enhanced in the case where the AFP module is initialized with learnable priors (row 8) rather than when it is randomly initialized.

Further, from row 2 vs. row 3-6, it can be seen that embodiments of the present method comprising only one or two modules among the three modules aforementioned (ISD, APF, MSDA) are still more efficient than methods of the prior art using only the EDD module (such as methods used in [REF 1] and [REF 2]).

In particular, it can be seen that the ISD module alone provides a clear improvement over its EDD module counterpart in the prior art (row 3 vs. row 2).

From row 4, row 6 and row 8, it can be seen that the AFP module and the MSDA module are complementary since they synergize when combined. The complementarity results from the fact that the MSDA module preemptively refines encoded feature maps to be partitioned, while the AFP module allows the discrete representations to adapt themselves for partitioning the encoded features maps.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1.  A computer-implemented method for dense regression tasks in input data (I), the method comprising:

    - (S10) determining at least one encoded feature map (F) of the input data (I);
    - (S20) discretizing the at least one encoded feature map (F) to obtain discrete representations (H) configured to represent internal space patterns of the input data (I);
    - (S30) extracting pixel-level features (P) for each element of the at least one encoded feature map (F); and
    - (S40) calculating a predicted output (D) by transferring portions of the discrete representations (H) to locations of the pixel-level features (P), wherein the portions and the locations are calculated based on similarity between elements of the pixel-level features (P) and elements of the discrete representations (H).

2.  The method of claim 1, wherein:

    - the steps (S10, S20, S30, S40) of the method are performed for a plurality of encoded feature maps ($F_l$) each having a resolution parameter (l) corresponding to a resolution of the input data (I) so as to obtain a plurality of predicted outputs ($D_l$); wherein the method further comprises combining the plurality of predicted outputs ($D_l$) obtained from the plurality of encoded feature maps ($F_l$) having different resolutions.

3.  The method of claim 2, wherein the step of (S41) combining the plurality of predicted outputs ($D_l$) obtained from the plurality of encoded feature maps ($F_l$) having different resolutions comprises calculating a mean value of the plurality of predicted outputs ($D_l$).

4.  The method of claim 2 or 3, wherein the step of (S10) determining at least one encoded feature map (F) of the input data (I) comprises using a multi-scale deformable attention module to refine the encoded feature maps at different resolutions.

5. The method of any of the preceding claims, wherein the step of (S20) discretizing the at least one encoded feature map (F) to obtain discrete representations (H) configured to represent internal space patterns of the input data (I) comprises using a cross-attention module.

6. The method of claim 5, wherein the cross-attention module is a transposed cross-attention module configured to induce a soft clustering of the encoded features among the discrete representations.

7. The method of claim 6, wherein the transposed cross-attention module comprises learnable priors, and wherein the discrete representations are obtained iteratively using the transposed cross-attention module initialized with such learnable priors.

8. The method of any of the preceding claims, wherein the step of (S40) calculating a predicted output (D) by transferring portions of the discrete representations (H) to locations of the pixel-level features (P); comprises using a cross-attention module.

9. The method of any of the preceding claims, further comprising a step of (S50) projecting the predicted output (D) to physical values.

10. The method of any of the preceding claims, wherein the dense regression task is a monocular depth estimation task in an image (I); and wherein the predicted output (D) is projected to depth values to obtain a depth map.

11. A system (100) for dense regression tasks in input data (I), the system comprising one or more processors and a computer-readable medium; the computer-readable medium comprising computer instructions stored therein, wherein the instructions, when executed by the one or more processors, cause the one or more processors to carry out the steps of:

- using an encoder module (110) to determine at least one encoded feature map (F) of the input data (I);
- using a first discretization module (140) to discretize the at least one encoded feature map (F) in order to obtain discrete representations (H) configured to represent internal space patterns of the input data (I);
- using a decoder module (120) for extracting pixel-level features (P) from the at least one encoded feature map (F); and
- using a second discretization module (150) to transfer portions of the discrete representations (H) to locations of the pixel-level features (P), wherein the portions and the locations are calculated based on similarity between elements of the pixel-level features (P) and elements of the discrete representations (H), thereby calculating a predicted output (D).

12. A computer program including instructions for executing the steps of the method of any of claims 1 to 10 when said program is executed by a computer.

13. A recording medium readable by a computer and having recorded thereon a computer program including instructions for executing the steps of the method of any of claims 1 to 10.

**Amended claims in accordance with Rule 137(2) EPC.**

1. A computer-implemented method for dense regression tasks in input data (I), the method comprising:

- (S10) determining at least one encoded feature map (F) of the input data (I);
- (S20) discretizing the at least one encoded feature map (F) to obtain discrete representations (H) configured to represent internal space patterns of the input data (I);
- (S30) extracting pixel-level features (P) for each element of the at least one encoded feature map (F); and
- (S40) calculating a predicted output (D) by transferring portions of the discrete representations (H) to locations of the pixel-level features (P), wherein the portions and the locations are calculated based on similarity between elements of the pixel-level features (P) and elements of the discrete representations (H);
wherein the dense regression task is a monocular depth estimation task in an image (I); and wherein the predicted output (D) is projected to depth values to obtain a depth map.

2. The method of claim 1, wherein:

   - the steps (S10, S20, S30, S40) of the method are performed for a plurality of encoded feature maps ($F_1$) each having a resolution parameter (1) corresponding to a resolution of the input data (I) so as to obtain a plurality of predicted outputs ($D_1$); wherein the method further comprises combining the plurality of predicted outputs ($D_1$) obtained from the plurality of encoded feature maps ($F_1$) having different resolutions.

3. The method of claim 2, wherein the step of (S41) combining the plurality of predicted outputs ($D_1$) obtained from the plurality of encoded feature maps ($F_1$) having different resolutions comprises calculating a mean value of the plurality of predicted outputs ($D_1$).

4. The method of claim 2 or 3, wherein the step of (S10) determining at least one encoded feature map (F) of the input data (I) comprises using a multi-scale deformable attention module to refine the encoded feature maps at different resolutions.

5. The method of any of the preceding claims, wherein the step of (S20) discretizing the at least one encoded feature map (F) to obtain discrete representations (H) configured to represent internal space patterns of the input data (I) comprises using a cross-attention module.

6. The method of claim 5, wherein the cross-attention module is a transposed cross-attention module configured to induce a soft clustering of the encoded features among the discrete representations, wherein the transposed cross-attention module is a cross-attention module wherein discrete representations are obtained using a transposed softmax operation.

7. The method of claim 6, wherein the transposed cross-attention module comprises learnable priors, and wherein the discrete representations are obtained iteratively using the transposed cross-attention module initialized with such learnable priors.

8. The method of any of the preceding claims, wherein the step of (S40) calculating a predicted output (D) by transferring portions of the discrete representations (H) to locations of the pixel-level features (P); comprises using a cross-attention module.

9. The method of any of the preceding claims, further comprising a step of (S50) projecting the predicted output (D) to physical values.

10. A system (100) for dense regression tasks in input data (I), the system comprising one or more processors and a computer-readable medium; the computer-readable medium comprising computer instructions stored therein, wherein the instructions, when executed by the one or more processors, cause the one or more processors to carry out the steps of:

    - using an encoder module (110) to determine at least one encoded feature map (F) of the input data (I);
    - using a first discretization module (140) to discretize the at least one encoded feature map (F) in order to obtain discrete representations (H) configured to represent internal space patterns of the input data (I);
    - using a decoder module (120) for extracting pixel-level features (P) from the at least one encoded feature map (F); and
    - using a second discretization module (150) to transfer portions of the discrete representations (H) to locations of the pixel-level features (P), wherein the portions and the locations are calculated based on similarity between elements of the pixel-level features (P) and elements of the discrete representations (H), thereby calculating a predicted output (D);
    wherein the dense regression task is a monocular depth estimation task in an image (I); and wherein the predicted output (D) is projected to depth values to obtain a depth map.

11. A computer program including instructions for executing the steps of the method of any of claims 1 to 9 when said program is executed by a computer.

12. A recording medium readable by a computer and having recorded thereon a computer program including instructions for executing the steps of the method of any of claims 1 to 9.

10

START

S10 — Determining an encoded feature map (F) of an image (I)

S20 — Discretizing the encoded feature map (F) to obtain discrete representations (H)

S30 — Extracting pixel-level features (P)

S40 — Transferring portions of the discrete representations (H) to the pixel-level features (P)

S50 — Projecting the predicted output to physical values

END

FIG.1

**FIG.2**

| Method | SI$_{log}$ | SqRel | A.Rel | iRMS |
| --- | --- | --- | --- | --- |
| | | *Lower is better* | | |
| PAP | 13.08 | 2.72% | 10.27% | 13.95 |
| P3Depth | 12.82 | 2.53% | 9.92% | 13.71 |
| VNL | 12.65 | 2.46% | 10.15% | 13.02 |
| DORN | 11.77 | 2.23% | 8.78% | 12.98 |
| BTS | 11.67 | 2.21% | 9.04% | 12.23 |
| PWA | 11.45 | 2.30% | 9.05% | 12.32 |
| ViP-DeepLab | 10.80 | 2.19% | 8.94% | 11.77 |
| NeWCRF | 10.39 | 1.83% | 8.37% | 11.03 |
| PixelFormer | 10.28 | 1.82% | 8.16% | 10.84 |
| Present method | 9.89 | 1.77% | 8.11% | 10.73 |

# FIG.3A

| | EDD | ISD | AFP | MSDA | $\delta_1 \uparrow$ | RMS $\downarrow$ | A.Rel $\downarrow$ |
| --- | --- | --- | --- | --- | --- | --- | --- |
| 1 | ✗ | ✗ | ✗ | ✗ | 0.890 | 0.370 | 0.104 |
| 2 | ✓ | ✗ | ✗ | ✗ | 0.905 | 0.367 | 0.102 |
| 3 | ✗ | ✓ | ✗ | ✗ | 0.919 | 0.340 | 0.096 |
| 4 | ✗ | ✓ | ✓ | ✗ | 0.931 | 0.319 | 0.091 |
| 5 | ✓ | ✗ | ✗ | ✓ | 0.931 | 0.326 | 0.091 |
| 6 | ✗ | ✓ | ✗ | ✓ | 0.934 | 0.319 | 0.088 |
| 7 | ✗ | ✓ | ✓$_R$ | ✓ | 0.930 | 0.319 | 0.089 |
| 8 | ✗ | ✓ | ✓ | ✓ | 0.940 | 0.313 | 0.086 |

# FIG.3B

15

Europäisches Patentamt
European Patent Office
Office européen des brevets

# EUROPEAN SEARCH REPORT

Application Number

EP 23 15 5975

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHENYU LI ET AL: "BinsFormer: Revisiting Adaptive Bins for Monocular Depth Estimation", ARXIV.ORG, CORNELL UNIVERSITY LIBRARY, 201 OLIN LIBRARY CORNELL UNIVERSITY ITHACA, NY 14853, 3 April 2022 (2022-04-03), XP091199243, * Section "4.2 Implementation details" * * abstract; figure 2 * * page 5, penultimate paragraph * * page 9, last paragraph * * page 8, lines 2-4 * * figure 3 * * page 7, last paragraph * ----- | 1-13 | INV. G06T7/50 G06N3/04 G06N3/0455 G06N3/0464 |

TECHNICAL FIELDS SEARCHED (IPC)

G06T
G06N

The present search report has been drawn up for all claims

| Place of search | Date of completion of the search | Examiner |
|---|---|---|
| Munich | 17 July 2023 | Winkler, Gregor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BHAT, SHARIQ FAROOQ ; ALHASHIM, IBRAHEEM ; WONKA, PETER. ADABINS.** Depth estimation using adaptive bins. *Proceedings of the IEEE/CVF Conference on Computer Vision and Pattern Recognition,* 2021, 4009-4018
- **FU, HUAN ; GONG, MINGMING ; WANG, CHAOHUI et al.** Deep ordinal regression network for monocular depth estimation. *Proceedings of the IEEE conference on computer vision and pattern recognition,* 2018, 2002-2011
- **LEE, JIN HAN ; HAN, MYUNG-KYU ; KO, DONG WOOK et al.** From big to small: Multi-scale local planar guidance for monocular depth estimation. *arXiv: 1907.10326,* 2019
- **MASOUMIAN, ARMIN ; RASHWAN, HATEM A. ; CRISTIANO, JULIÁN et al.** Monocular depth estimation using deep learning: A review. *Sensors,* 2022, vol. 22 (14), 5353
- **ZHU, XIZHOU ; SU, WEIJIE ; LU, LEWEI ; LI BIN ; WANG, XIAOGANG ; DAI, JIFENG.** Deformable DETR: deformable transformers for end-to-end object detection. *9th International Conference on Learning Representations, ICLR 2021, Virtual Event, Austria,* 03 May 2021
- **BA, JIMMY LEI ; KIROS, JAMIE RYAN ; HINTON, GEOFFREY E.** Layer normalization. *arXiv: 1607.06450,* 2016
- Are we ready for autonomous driving? The KITTI vision benchmark suite. **GEIGER, ANDREAS ; LENZ, PHILIP ; URTASUN, RAQUEL.** 2012 IEEE conference on computer vision and pattern recognition. IEEE, 2012, 3354-3361
- **ZHANG, ZHENYU ; CUI, ZHEN ; XU, CHUNYAN et al.** Pattern-affinitive propagation across depth, surface normal and semantic segmentation. *Proceedings of the IEEE/CVF conference on computer vision and pattern recognition.,* 2019, 4106-4115

- **PATIL, VAISHAKH ; SAKARIDIS, CHRISTOS ; LINIGER, ALEXANDER et al.** P3Depth: Monocular Depth Estimation with a Piecewise Planarity Prior. *Proceedings of the IEEE/CVF Conference on Computer Vision and Pattern Recognition,* 2022, 1610-1621
- **YIN, WEI ; LIU, YIFAN ; SHEN, CHUNHUA et al.** Enforcing geometric constraints of virtual normal for depth prediction. *Proceedings of the IEEE/CVF International Conference on Computer Vision and Pattern Recognition,* 2019, 5684-5693
- **YU, ZEHAO ; ZHENG, JIA ; LIAN, DONGZE et al.** Single-image piece-wise planar 3d reconstruction via associative embedding. *Proceedings of the IEEE/CVF Conference on Computer Vision and Pattern Recognition,* 2019, 1029-1037
- **LEE, SIHAENG ; LEE, JANGHYEON ; KIM, BYUNGJU et al.** Patch-wise attention network for monocular depth estimation. *Proceedings of the AAAI Conference on Artificial Intelligence,* 2021, 1873-1881
- **QIAO, SIYUAN ; ZHU, YUKUN ; ADAM, HARTWIG et al.** Vip-deeplab: Learning visual perception with depth-aware video panoptic segmentation. *Proceedings of the IEEE/CVF Conference on Computer Vision and Pattern Recognition,* 2021, 3997-4008
- **YUAN, WEIHAO ; GU, XIAODONG ; DAI, ZUOZHUO et al.** Neural Window Fully-Connected CRFs for Monocular Depth Estimation. *Proceedings of the IEEE/CVF Conference on Computer Vision and Pattern Recognition,* 2022, 3916-3925
- **AGARWAL, ASHUTOSH ; ARORA, CHETAN.** Attention Attention Everywhere: Monocular Depth Prediction with Skip Attention. *Proceedings of the IEEE/CVF Winter Conference on Applications of Computer Vision,* 2023, 5861-5870
- **EIGEN, DAVID ; PUHRSCH, CHRISTIAN ; FERGUS, ROB.** Depth map prediction from a single image using a multi-scale deep network. *Advances in neural information processing systems,* 2014, vol. 27